# EUROPEAN PATENT SPECIFICATION

(11) **EP 2 279 880 B1**
(45) Date of publication and mention of the grant of the patent: **06.03.2013**
(21) Application number: 10006271.0
(22) Date of filing: 17.06.2010
(51) Int. Cl.: B60B 5/02, B60B 15/02

(54) **Variable-contact wheel**
Rad mit variablem Kontakt
Roue à contact variable

(30) Priority: 30.07.2009 IT FI20090166
(43) Date of publication of application: 02.02.2011
(73) Proprietor: Bernini, Fabrizio, 52021 Bucine (AR) (IT)
(72) Inventor: Bernini, Fabrizio, 52021 Bucine (AR) (IT)
(74) Representative: Lanzoni, Luciano

(56) References cited:
- WO-A2-99/45757
- AT-B- 305 783
- DE-A1- 3 015 731
- US-A- 1 123 236
- US-A- 2 280 908
- US-A- 3 888 545
- US-A- 4 170 384

## Description

The object of the present invention is a variable-contact wheel. Such a wheel according to the preamble of claim 1 is known from the document WO 99/45757 A.

In particular, the present invention is for use advantageously in self-propelling machines such as lawn-mowers of automatic type for domestic use, that is, machines capable of operating independently onto a grass surface to be cut.

In general, the lawn-mowers comprise a box-like body provided with blades on a bottom wall thereof, a motor and at least four wheels which are in steady contact with the ground.

In other words, the wheels exhibit an ordinary tread which is either smooth or provided with grooves to improve the grip thereof with the ground.

The automatic lawn-mowers are often left in operation within a lawn or a garden for a time, sometimes for several days.

During this time interval, especially in the summer or spring season, short but intense showers may occur in sunny days.

Consequently, the lawn-mower has to operate onto a ground which may exhibit different consistency as the time goes by, the same ground being dry and compact in sunny days, and wet and soft in rainy days.

The different consistency of the ground upon which the lawn-mower is operating would require a different grip of the wheels: a stronger grip when the ground is wet, as the wheels would tend to sink and slip, a weaker grip when the ground is dry.

Accordingly, the motive power necessary to face the two different types of grounds should be different as well. Disadvantageously, however, the wheels presently in use have a surface of steady contact with the ground and this implies an almost unchanged grip despite a changing consistency of same ground. This may bring about an unbalance between the power actually required and the one delivered by the motor.

In this context, the technical task on which the present invention is based is to propose a variable-contact wheel able to overcome the drawbacks of the prior art above cited.

In particular, it is the object of the present invention to provide a variable-contact wheel able to fit any type of ground by changing its grip with the ground as required.

Accordingly, the object of the present invention is to provide a variable-contact wheel allowing the self-propelling machine - in this case a lawn-mower - on which it is mounted, to operate with ease under conditions of both dry and wet ground.

Moreover, the object of the present invention is to provide a variable-contact wheel allowing the self-propelling machine on which it is mounted to deliver the power actually required, thereby reducing any waste thereof.

The indicated technical task and specified object are substantially reached by means of a variable-contact wheel which includes the technical characteristics set forth in one or more of the appended claims.

Further characteristics and advantages of the present invention will appear more clearly from the indicative, and thus not limiting description of a preferred but non-exclusive embodiment of a variable-contact wheel, as illustrated in the accompanying drawings, wherein:

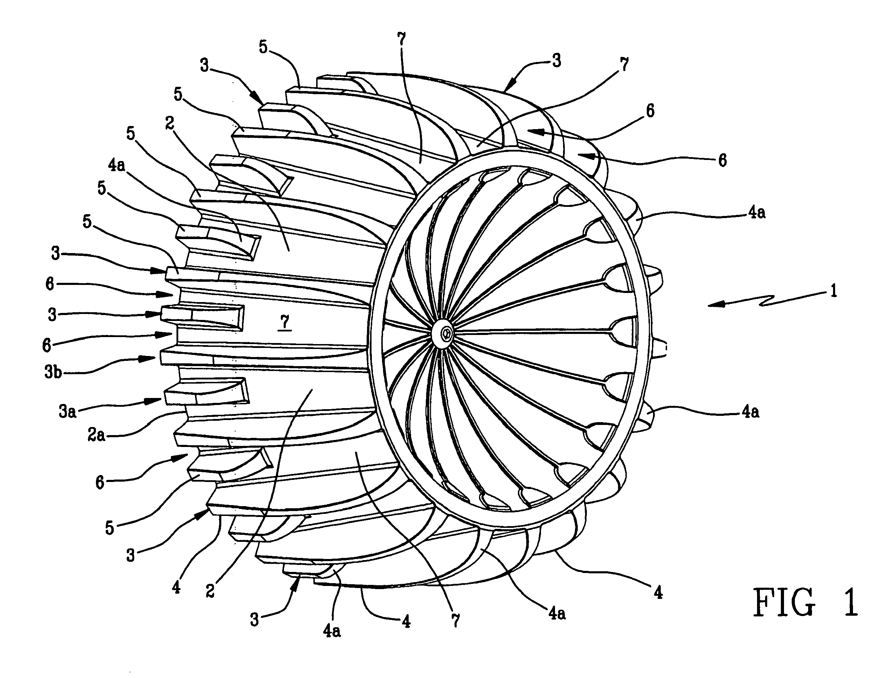

- Fig. 1 is a perspective view of the wheel according to the present invention;

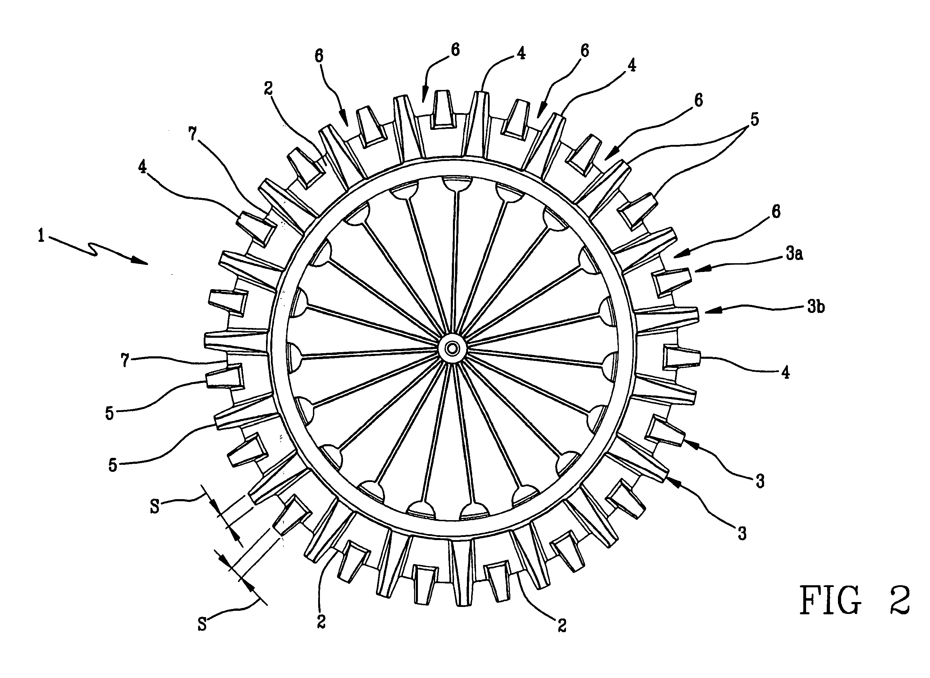

- Fig. 2 is a front view of the wheel of Fig. 1;

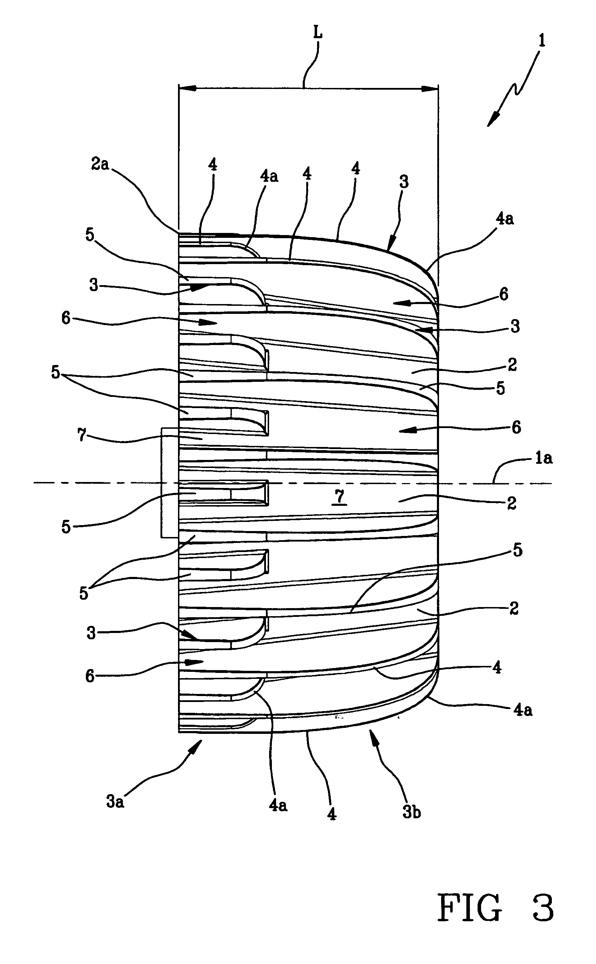

- Fig. 3 is a side view of the wheel of Fig. 1; and
- Fig. 4 is a perspective view of a lawn-mower on which two variable-contact wheels are mounted according to the present invention.

With reference to the attached figures, numeral 1 designated as a whole a variable-contact wheel according to the present invention.

As clearly visible in the attached figures, the wheel 1 comprises a tread 2 exhibiting a plurality of radial fins 3 which extend over at least a portion of the width L of tread 2.

Such fins 3 extend radially upwards from the surface of tread 2 and parallel to the axis of rotation 1a of wheel 1.

Said fins 3 has a thickness s which is less than the width L of said tread, but it is such as to define, in correspondence of their top side 4, a first surface 5 of contact with the ground.

Advantageously, said fins 3 may extend also over the whole width of tread 2.

Preferably, provision is made for a first series of fins 3a extending over at least a portion of the width L of tread 2, and a second series of fins 3b extending over the whole width L of tread 2.

In a preferred embodiment herein illustrated, the first series of fins 3a alternates with a second series 3b of fins. In other words, interposed between two successive fins 3 extending along the whole width L of tread 2 is one fin 3 which extends only through a fraction of the width of tread 2.

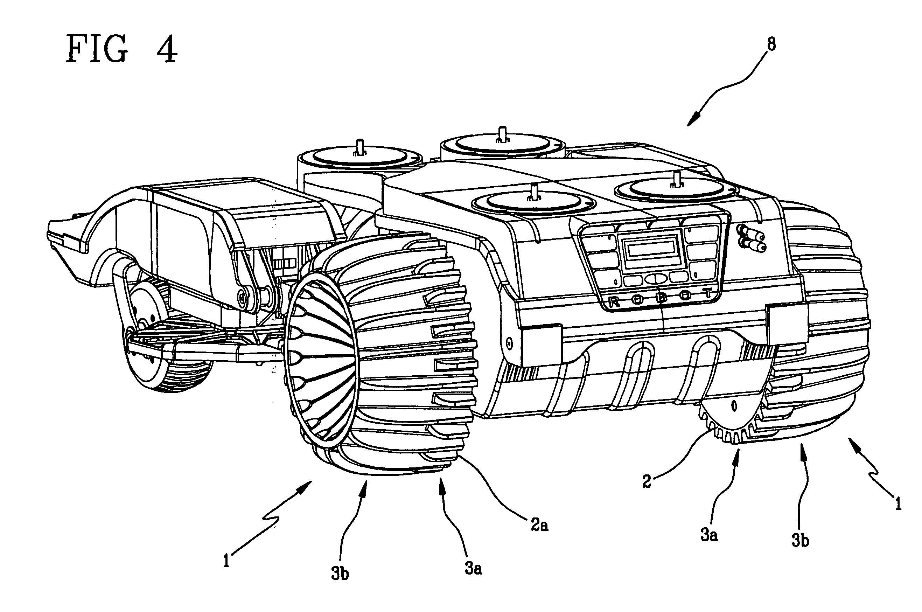

Preferably, the first series of fins 3a is located in proximity of an edge 2a of tread 2, in particular of the edge 2a which is closer to the machine's box-like body in case the wheel is mounted on a self-propelling machine, as illustrated in Fig. 4.

Two adjacent fins 3 delimit sideway a channel 6 whose bottom wall 7 coincides with the tread 2 and defines a second contact surface 7 of the wheel.

In particular, each fin 3 of the first series 3a is disposed within the channel 6 defined by two contiguous fins of the second series 3b.

In this way, each fin 3 of the first series 3a subdivides the channel 6 interposed between two fins 3 of the second series 3b into two smaller channels 6. Preferably, the top side 4 of each fin 3 exhibits a profile which, at least from one end 4a slopes down with curvilinear development toward the tread 2.

Such wheels 1 can advantageously be mounted on a generic self-propelling machine, especially on a lawn-mower 8.

Preferably, the wheels 1 of the present invention are driving wheels.

The lawn-mower 8, which is an object of the present invention, exhibits at least two variable-contact driving wheels 1.

The particular conformation of the external surface of wheel 1, having fin-shaped projections 3, allows the same wheel 1 to easily accommodate any condition of the ground.

Actually, the wheel 1 exhibits two contact surfaces 5, 7 which are at different distances from the axis of rotation 1a and have different surface extension.

When the ground is dry and compact, the wheels require less grip and, therefore, a limited resting surface. Accordingly, it is sufficient that the wheels will rest onto the first contact surface 5 defined only by the top side 4 of fins 3.

Since the resting surface is limited, a reduced power delivered by the motors will be enough.

Moreover, under optimal operating conditions, that is, with a dry ground, the axial load on the motor is reduced because the major part of the resting surface is closer to the machine's box-like body, that is, closer to the output shaft and, therefore, the arm is reduced.

On the other hand, when the ground is soft because it is wet and muddy, the wheels tend to sink slightly in the ground until they rest thereon with the second contact surface 7 defined by the bottom wall 7 of channel 6, that is, by the free surface of the tread 2 between one fin 3 and the other.

In this way, the contact surface becomes larger and the grip of the wheels increases as well.

The load on the ground results variable without the aid of electric or electronic components, since the wheel adjusts itself according to the ground.

The contact of the wheel with the ground varies according to the type of ground and, therefore, to the resistance offered by the ground to the weight of the machine.

These advantages are particularly evident in case of self-propelling means, such as the lawn-mowers, as with such machines, users cannot decide instantly how much power is to be delivered to the wheels, nor they can intervene on the conditions of the ground.

## Claims

1. Variable-contact wheel comprising a tread (2) having a plurality of radial fins (3) extending over at least a fraction of the width (L) of tread (2), said fins (3) extending radially over the whole (L) of tread (2) and parallel to the axis of rotation (1a) of the wheel **characterized in that** said plurality of radial fins (3), which extend at least over a fraction of the width (L) of the tread (2), define a first series (3a) of fins (3), and said fins (3), which extend radially over the whole width (L) of tread (2), define a second series (3b) of fins (3).

2. Wheel according to claim 1, **characterized in that** said first (3a) and said second (3b) series of fins (3) alternate with each other.

3. Wheel according to claim 1 or 2, **characterized in that** said first series of fins (3) is located in proximity of an edge (2a) of tread (2).

4. Wheel according to claims 1 to 3, **characterized in that** the top part of each fin (3) defines a first contact surface (5) of said wheel (1).

5. Wheel according to claims 1 to 4, **characterized in that** two adjacent fins (3) delimit laterally a channel (6); said channel (6) exhibiting a bottom wall (7), coinciding with the free surface of the tread (2), which defines a second contact surface (7) of said wheel (1).

6. Wheel according to any of the preceding claims, **characterized in that** said fins (3) exhibit a top part (4) having a profile which slopes down, at least from one end (4a) with a curvilinear development, towards the tread (2).

7. Lawn-mower **characterized in that** it comprises at least two variable-contact wheels (1) according to one or more of claims 1 to 6.

8. Lawn-mower according to claim 7, **characterized in that** said variable-contact wheels (1) are driving wheels.

## Patentansprüche

1. Rad mit variablem Kontakt, beinhaltend eine Lauffläche (2), die mehrere radiale Rippen (3) aufweist, die sich über zumindest einen Teilabschnitt der Breite (L) der Lauffläche (2) erstrecken, wobei stich die Rippen (3) radial über die gesamte Breite (L) der Lauffläche (2) und parallel zur Drehachse (1a) des Rades erstrecken, **dadurch gekennzeichnet, dass** die mehreren radialen Rippen (3), die sich über zumindest einen Teilabschnitt der Breite (L) der Lauffläche (2) erstrecken, eine erste Reihe (3a) von Rippen (3) bilden, und dass die Rippen (3), die sich radial über die gesamte Breite (L) der Lauffläche (2) erstrecken, eine zweite Reihe (3b) von Rippen (3) bilden.

2. Rad nach Anspruch 1, **dadurch gekennzeichnet, dass** die erste Reihe (3a) und die zweite Reihe (3b) von Rippen (3) abwechselnd zueinander angeordnet sind.

3. Rad nach Anspruch 1 oder 2, **dadurch gekennzeichnet, dass** die erste Reihe von Rippen (3) in der Nahe einer Kante (2a) der Lauffläche (2) angeordnet ist.

4. Rad nach den Ansprüchen 1 bis 3, **dadurch gekennzeichnet, dass** der obere Teil jeder Rippe (3) eine erste Kontaktfläche (5) des Rades (1) bildet.

5. Rad nach den Ansprüchen 1 bis 4, **dadurch gekennzeichnet, dass** zwei benachbarte Rippen (3) jeweils seitlich einen Kanal (6) begrenzen; wobei dieser Kanal (6) eine Bodenwand (7) aufweist, die mit der freien Oberfläche der Lauffläche (2) übereinstimmt, welche eine zweite Kontaktfläche (7) des Rades (1) bildet.

6. Rad nach einem der vorhergehenden Ansprüche, **dadurch gekennzeichnet, dass** die Rippen (3) einen oberen Teil (4) aufweisen, der ein Profil aufweist, das zumindest an einem Ende (4a) mit einem kurvenförmigen Verlauf zu der Lauffläche (2) hin abfällt.

7. Rasenmäher, **dadurch gekennzeichnet, dass** er zumindest zwei Räder mit variablem Kontakt (1) nach einem oder mehreren der Ansprüche von 1 bis 6 beinhaltet.

8. Rasenmäher nach Anspruch 7, **dadurch gekennzeichnet, dass** die Räder mit variablem Kontakt (1) Antriebsräder sind.

## Revendications

1. Une roue à contact variable comprenant une bande de roulement (2) ayant une pluralité d'ailettes radiales (3) s'étendant sur au moins une fraction de la largeur (L) de la bande de roulement (2), lesdites ailettes (3) s'étendant radialement sur toute la largeur (L) de la bande de roulement (2) et parallèlement à l'axe de rotation (1a) de la roue, **caractérisée en ce que** ladite pluralité d'ailettes radiales (3), qui s'étendent au moins sur une fraction de la largeur (L) de la bande de roulement (2), définissent une première série (3a) d'ailettes (3), et lesdites ailettes (3), qui s'étendent radialement sur toute la largeur (L) de la bande de roulement (2), définissent une deuxième série (3b) d'ailettes (3).

2. La roue selon la revendication 1, **caractérisée en ce que** ladite première (3a) et ladite deuxième (3b) séries d'ailettes (3) sont alternées entre elles.

3. La roue selon la revendication 1 ou 2, **caractérisée en ce que** ladite première série d'ailettes (3) est située à proximité d'un bord (2a) de la bande de roulement (2).

4. La roue selon les revendications de 1 à 3, **caractérisée en ce que** la partie supérieure de chaque ailette (3) définit une première surface de contact (5) de ladite roue (1).

5. La roue selon les revendications de 1 à 4, **caractérisée en ce que** deux ailettes (3) adjacentes délimitent latéralement un canal (6) ; ledit canal (6) présentant une paroi de fond (7), coïncidant avec la surface libre de la bande de roulement (2), qui définit une deuxième surface de contact (7) de ladite roue (1).

6. La roue selon l'une quelconque des revendicaLions précédentes, **caractérisée en ce que** lesdites ailettes (3) présentent une partie supérieure (4) ayant un profil qui descend en pente, au moins à partir d'une extrémité (4a), selon un développement curviligne, vers la bande de roulement (2).

7. Une tondeuse à gazon **caractérisée en ce qu'**elle comprend au moins deux roues à contact variable (1) selon une ou plusieurs des revendications de 1 à 6.

8. La tondeuse à gazon selon la revendication 7, **caractérisée en ce que** lesdites roues à contact variable (1) sont des roues motrices.
